# EUROPÄISCHE PATENTSCHRIFT

(11) **EP 3 682 173 B1**
(45) Veröffentlichungstag und Bekanntmachung des Hinweises auf die Patenterteilung: **20.10.2021**
(21) Anmeldenummer: 18782875.1
(22) Anmeldetag: 08.09.2018
(51) Int. Cl.: F24T 10/15

(54) **SCHLAUCH-ROHR-SYSTEM UND VORRICHTUNG SOWIE VERFAHREN ZUR HERSTELLUNG EINES SCHLAUCH-ROHR-SYSTEMS**
HOSE-PIPE SYSTEM AND DEVICE AND METHOD FOR PRODUCING A HOSE-PIPE SYSTEM
SYSTÈME DE TUYAU À TUBES ET DISPOSITIF AINSI QUE PROCÉDÉ POUR LA FABRICATION D'UN SYSTÈME DE TUYAU À TUBES

(30) Priorität: 12.09.2017 DE 102017008566
(43) Veröffentlichungstag der Anmeldung: 22.07.2020
(73) Patentinhaber: BLZ Geotechnik GmbH, 39245 Gommern (DE)
(72) Erfinder: WAGNER, Rolf, 39175 Wahlitz (DE)
(74) Vertreter: Fischer, Volker
(86) Internationale Anmeldenummer: PCT/DE2018/000260
(87) Internationale Veröffentlichungsnummer: WO 2019/052592

(56) Entgegenhaltungen:
- EP-A1- 1 486 741
- EP-A1- 2 354 613
- EP-A1- 2 840 333
- WO-A1-98/21024
- WO-A1-2008/003184

## Beschreibung

Die Erfindung betrifft ein Schlauch-Rohr-System, welches mehrere Rohre zur Aufnahme von Wärme aus dem Erdreich aufweist, wobei die Rohre innerhalb eines Schutzschlauchs angeordnet sind.

Die Erfindung betrifft auch eine Vorrichtung zur Herstellung eines Schlauch-Rohr-Systems.

Die Erfindung betrifft ebenso ein Verfahren zur Herstellung eines Schlauch-Rohr-Systems, bei welchem mehrere Rohre in einem Schutzschlauch angeordnet werden.

In dieser Beschreibung geht es insbesondere um Schlauch-Rohr-Systeme, welche auch als ein schlauchummanteltes Rohrbündel bezeichnet werden und welche als ein Wärmeübertrager oder eine Erdwärmesonde in einer Tiefen- oder Erdwärmebohrung beispielsweise vertikal eingesetzt und betrieben werden.

Es ist bekannt, Wärmeübertrager oder Erdwärmesonden zur Nutzung von Erdwärme für Heizzwecke oder zum Kühlen in vorbereitete Tiefenbohrungen in die Erde zu verbringen. Üblicherweise sind diese Erdwärmesonden beispielsweise oberirdisch an einen entsprechenden Flüssigkeitskreislauf angeschlossen und weisen einen Bestandteil für einen Vorlauf sowie einen Bestandteil für einen Rücklauf auf.

Zur Ausführung derartiger Wärmeübertrager oder Erdwärmesonden sind verschiedene Lösungen aus dem Stand der Technik bekannt.

Aus der DE 20 2007 008 880 U1 ist ein Wärmeübertragungsrohr zur Übertragung von Wärme zwischen einem durch das Wärmeübertragungsrohr fließenden Medium und einem das Wärmeübertragungsrohr umgebenden Medium, insbesondere für den Entzug von Erdwärme, die Beheizung von Biogasanlagen und für in Gebäudeteilen verlegten Heiz- und Kühlleitungen, bekannt.

Die in dieser Druckschrift zu lösende Aufgabe besteht darin, ein herkömmliches Wärmeübertragungsrohr dahingehend weiterzuentwickeln, dass einerseits die spezifische Wärmeübertragungsleistung, darüber hinaus aber auch in einer besonderen Ausführungsform die Widerstandsfähigkeit des Wärmeübertragungsrohres erhöht wird.

Diese Aufgabe wird dadurch gelöst, dass das Verhältnis zwischen Außendurchmesser des Wärmeübertragungsrohrs und seiner Wanddicke größer als 11, bevorzugt mindestens 13, ist.

Eine weitere Lösung mit einem koaxial aufgebauten Wärmeübertragungsrohr ist aus der DE 20 2007 006 682 U1 bekannt. Beschrieben ist eine Erdwärmesonde aus Kunststoff mit einem Vorlauf- und einem Rücklaufkanal in koaxialer Anordnung. In dieser Lösung ist es vorgesehen, dass ein Innenrohr mittels längs verlaufender Abstandshalter in einem Außenrohr lose über die gesamte Länge zentrisch positioniert und längs verschiebbar angeordnet ist, wobei Innenrohr, Außenrohr und Abstandshalter aus Kunststoff bestehen.

Um ein derartiges koaxial aufgebautes Wärmeübertragungsrohr in das Erdreich einzubringen, muss eine Tiefenbohrung bereitgestellt werden, deren Durchmesser größer als der Außendurchmesser eines koaxial aufgebauten Wärmeübertragungsrohrs ist. Nach dem Einsetzen des Wärmeübertragungsrohrs in die Tiefenbohrung muss der Abstand zwischen dem Außendurchmesser des Wärmeübertragungsrohrs und dem Bohrloch mit Füllmaterial verfüllt werden. Somit muss der Wärmestrom aus dem Erdreich zuerst den Weg durch das Füllmaterial zurücklegen, bevor er das koaxial aufgebaute Wärmeübertragungsrohr erreicht. Somit wird der mögliche Wärmeentzug aus dem Erdreich gemindert, selbst für den Fall, dass ein Füllmaterial mit einem guten Wärmeleitwert genutzt wird.

Aus der DE 20 2014 003 187 U1 ist ein Fixier- sowie Zentrierelement für wenigstens zwei Rohrpaare von Erdwärmesonden mit einem mittig zwischen den Rohrpaaren angeordneten Verpressschlauch bekannt. Offenbart ist es weiterhin, dass die Rohrpaare und der Verpressschlauch ein Rohrbündel bilden, wobei das Fixier- sowie Zentrierelement aus einem Rohr gefertigt sind, an dem bogenförmig nach außen, entgegen der Einbaurichtung des Rohrbündels in eine Vertikal-Erdbohrung ragende Flügel angeordnet sind und wobei zwischen den seitlichen Flanken der Flügel die Rohrpaare angeordnet sind.

Vorgesehen ist es, dass das Wärmetauscherrohr zusammen mit dem Verpressschlauch und mit Hilfe der Fixier- und Zentrierelemente in einem mechanisch relativ fest zueinander gehörenden Bündel, also einem Rohrbündel, bereitgestellt wird, welches in eine Vertikalbohrung in das Erdreich eingebracht wird. Nachdem dieses Rohrbündel in das Erdreich eingebracht ist, wird ein Verpressmedium über den Verpressschlauch von unten nach oben fortschreitend in die Vertikalbohrung einge-bracht, welches sich dann um diese Einheit dichtend herumlegt und die Rohrbündeleinheit fixiert.

Auch in dieser Lösung muss ein wärmeleitfähiges Verpressmedium oder Füllmaterial zum Einsatz kommen, welches zwischen der Bohrlochwandung und dem Rohrbündel eingebracht wird, den Wärmeentzug aus dem Erdreich mindert und beim Verpressen zu einer Beeinträchtigung des Grundwassers führen kann.

Aus dem Stand der Technik ist auch die Anwendung von Schutzschläuchen zur Herstellung eines schlauchummantelten Rohrbündels bekannt, welches beispielsweise für eine Verlegung für im Erdreich eingebrachte Wärmeübertrager genutzt wird. Hierbei dient der Schlauch sowohl als Schutzmantel als auch zur Konfektionierung von Rohren, Leitungen oder Leitungsbündeln. Damit ein derartiger Schutzschlauch seiner Schutzfunktion gerecht werden kann, muss dieser das Rohr oder Leitungsbündel vollständig ummanteln oder umschließen.

Aus dem Stand der Technik ist auch die Verwendung von Kabelschutzrohren zur Ummantelung und zum Schutz von Rohren, Leitungen oder Leitungsbündeln bekannt. Derartige Kabelschutzrohre und -schläuche werden beispielsweise im Fahrzeugbau, bei einem Verlegen von Leitungen oder im Tiefbau bzw. der Gewinnung von Erdwärme angewandt.

Für die Herstellung eines schlauchummantelten Rohrbündels, welches auch als Schlauch-Rohr-System bezeichnet wird, werden im Stand der Technik Vorrichtungen benutzt, die verschiedene Materialien und Bauteile um die Rohre, Leitungen oder Leitungsbündel herum anordnen können.

Aus der DE 10 2011 102 485 A1 sind ein Verfahren und eine Anordnung zum Einbau von mehreren Rohren in einem Bohrloch sowie eine Anwendung der Erfindung für die Zementierung einer Rohrtour in einer Tiefenbohrung bekannt. Ziel ist es, mehrere Rohre optimal im Bohrloch für den Wärmeentzug aus dem Erdreich anzuordnen.

Dies wird dadurch erreicht, dass die in das Bohrloch einzubauenden Rohre zielgerichtet zur Wandung des Bohrloches bewegt und anpassungsfähig an die Wandung fixiert werden. Zur Realisierung eines derartigen Schlauch-Rohr-Systems sind die Wärmeübertragungsrohre, die in gleichmäßigen Abständen mit Befestigungslaschen mit dem Sondenschlauch verbunden sind, im Inneren des Sondenschlauchs in das Bohrloch als eng aneinander liegendes Rohrbündel eingebaut. Sie werden beim Einbringen des Füllmaterials an die Bohrlochwand bewegt. Besonders vorteilhaft ist es, wenn die Rohre vorzugsweise in gleichmäßigen Abständen über den Umfang in einer schlauchartigen Umhüllung und in Abständen von jeweils einigen Metern über die Länge über Befestigungslaschen mit der Umhüllung verbunden sind und die schlauchartige Umhüllung eine Barriere für die Verfüllsuspension darstellt.

Die Anwendung von Befestigungslaschen für derartige Rohrbündel mit einem Schutzschlauch hat den Nachteil, dass die Rohre nur mit einem hohen Arbeitsaufwand mit den Befestigungslaschen des Schutzschlauchs verbunden werden können. Eine automatisierte Herstellung derartiger Systeme ist bisher nicht bekannt. Außerdem kann bei dem Anbringen der Befestigungslaschen die Ordnung der Rohre nicht sicher eingehalten werden und auf den Abständen zwischen den Befestigungslaschen ist keine Führung der Rohre am Schutzschlauch gegeben. Auch kann ein Verschieben, Verrutschen und Verwinden des Schutzschlauchs entlang der Rohre nicht sicher verhindert werden.

Eine derartige Führung ist aber für die ordnungsgemäße und sichere Funktion eines Schlauch-Rohr-Systems eine wesentliche Voraussetzung, da die flexiblen dünnen Rohre sonst eine beliebige nicht vorbestimmbare Lage einnehmen. Der wesentliche Nachteil dieser Anordnung besteht aber in der Durchdringung des Schlauches mit den Befestigungselementen und der damit verbundenen Schwächung der Festigkeit des Schlauches. Durch diese auftretenden Beschädigungen des Schlauches kann nicht sicher verhindert werden, dass das Füllmaterial in unkontrollierter Menge aus dem Schlauch austritt. Der Schlauch wird seiner Schutzfunktion somit nicht mehr gerecht.

Aus dem Stand der Technik ist keine Vorrichtung oder ein Verfahren bekannt, womit Rohre mit einer großen Längsausdehnung in einem Verfahren mit einem Schlauch von innen verbunden werden können, so dass große Längen mit stabil angeordneten Rohren ohne Durchdringung des Schutzschlauchs als ein Schlauch-Rohr-System hergestellt werden könnten.

Die Aufgabe der Erfindung besteht nunmehr darin, ein Schlauch-Rohr-System und eine Vorrichtung sowie ein Verfahren zur Herstellung eines Schlauch-Rohr-Systems anzugeben, womit mehrere in einem Rohrbündel angeordnete Rohre in einem Schutzschlauch geschützt und gleichzeitig in einer festen Verbindung mit dem Schutzschlauch geordnet eingebracht werden können. Weiterhin soll eine sichere Beabstandung der Rohre zueinander sowie ein möglichst verlustfreier Kontakt der Rohre zur Bohrlochwand erreicht werden. Außerdem sollen die Herstellung eines Schlauch-Rohr-Systems vereinfacht und die Kosten hierfür reduziert werden.

Die Aufgabe wird durch ein Schlauch-Rohr-System mit den Merkmalen gemäß Patentanspruch 1 der selbstständigen Patentansprüche gelöst. Weiterbildungen sind in den abhängigen Patentansprüchen 2 bis 4 angegeben.

Die Aufgabe wird auch durch eine Vorrichtung zur Herstellung eines Schlauch-Rohr-Systems mit den Merkmalen gemäß Patentanspruch 5 der selbstständigen Patentansprüche gelöst. Weiterbildungen sind in den abhängigen Patentansprüchen 6 bis 10 angegeben.

Die Aufgabe wird weiterhin durch ein Verfahren zur Herstellung eines Schlauch-Rohr-Systems mit den Merkmalen gemäß Patentanspruch 11 der selbstständigen Patentansprüche gelöst. Weiterbildungen sind in den abhängigen Patentansprüchen 12 bis 15 angegeben.

Die Erfindung sieht vor, dass die Rohre der Erdwärmesonde mit dem Schutzschlauch in einem Schlauch-Rohr-System dauerhaft, stabil und ohne Beschädigung des Schutzschlauchs miteinander verbunden werden, wobei zwischen dem Schutzschlauch und den Rohren kein Abstand vorgesehen ist.

Die in der Erfindung genutzten Schutzschläuche können beispielsweise aus einem starren, unelastischen Gewebeschlauch bestehen. Da ein derartiger Schutzschlauch nicht dehnbar ist, wird sein Durchmesser gleich oder größer dem Durchmesser der Tiefenbohrung gewählt, in welche der Schutzschlauch als fertiges Schlauch-Rohr-System eingesetzt werden soll. In der Praxis kann beispielsweise ein Schutzschlauch mit einem Durchmesser von 190 mm in Tiefenbohrungen mit einem Durchmesser zwischen 140 mm und 175 mm eingesetzt werden.

Alternativ kann ein Schutzschlauch zur Anwendung kommen, welcher radial dehnbar ist und sich derart an verschiedene Durchmesser einer Tiefenbohrung nach dem Einbringen anpassen kann. Hierbei ist es vorgesehen, dass sich dieser Schutzschlauch aber nicht axial dehnen lässt und die Stabilität der Verbindungen zwischen den Rohren und dem Schutzschlauch im Schlauch-Rohr-System nicht beeinträchtigt wird.

Es ist vorgesehen, dass die Rohre von innen mit dem unelastischen oder dehnbaren Schutzschlauch verklebt werden. Derart werden die Rohre fest mit dem Schutzschlauch verbunden. Die Erfindung ist besonders geeignet, um Schlauch-Rohr-Systeme mit Rohren und einem Schutzschlauch aus Kunststoff herzustellen.

Für das Verkleben mehrerer Rohre an der Innenwandung eines Schutzschlauchs zur Herstellung eines Schlauch-Rohr-Systems ist erfindungsgemäß eine Vorrichtung zur Herstellung des Schlauch-Rohr-Systems vorgesehen, welche die beiden Komponenten Schutzschlauch und Rohre an den gewünschten Stellen zusammenbringt und durch Verkleben an der Innenseite des Schutzschlauchs fest fixiert.

Eine derartige erfindungsgemäße Vorrichtung zur Herstellung eines Schlauch-Rohr-Systems besteht beispielsweise aus zwei Teilvorrichtungen. In der ersten Teilvorrichtung, welche als Klebstoffbeschichtungsvorrichtung bezeichnet wird, werden die Rohre mit Klebstoff beschichtet und somit für die Anordnung dieser Rohre im Schutzschlauch eines Schlauch-Rohr-Systems vorbereitet. Um ein Verkleben der Rohre untereinander zu verhindern und trotzdem eine stabile Verbindung mit dem Schutzschlauch herzustellen, werden die Rohre nur mit einer Klebstoffspur in axialer Richtung beschichtet. Diese Klebstoffspur wird so an der Außenseite der Rohre angebracht, dass sie sich auf dem verdrillungsfreien Rohr beispielsweise immer im gleichen Mittelpunktswinkel von 0° oder 180°, bezogen auf den Rohrquerschnitt, befindet.

Bei diesem Verfahrensschritt wird die Klebstoffspur beispielsweise auf dem Scheitel des Rohres oben oder der tiefsten Stelle unten aufgebracht. Beim einem nachfolgenden Aufwickeln der Rohre auf eine Trommel zeigt die Klebespur in jeder Wicklung und jeder Lage radial nach außen oder nach innen. Auf diese Weise werden mit der Klebstoffbeschichtungsvorrichtung so viele Trommeln mit beschichteten Rohren bereitgestellt, wie Rohre in einen Schutzschlauch eines Schlauch-Rohr-Systems eingebracht werden sollen.

Die zweite Teilvorrichtung, welche als Schlauch-Rohr-Montagevorrichtung bezeichnet wird, hat die Aufgabe, die mit einer Klebstoffspur vorbereiteten Rohre im Inneren des Schutzschlauchs anzuordnen und somit das fertige Schlauch-Rohr-System herzustellen, in welchem die Rohre fest mit der Innenwand des Schutzschlauchs verbunden sind. Über geeignete Mittel werden die vorbereiteten Rohre in dem Schutzschlauch so verteilt angeordnet, dass die Rohre an vorgegebenen Stellen eines festgelegten Mittelpunktswinkels, bezogen auf den kreisförmigen Schlauchquerschnitt des Schutzschlauchs, platziert werden.

Hierfür werden die mit einer Klebstoffspur beschichteten Rohre von den Trommeln derart abgewickelt und positioniert, dass die Rohre in den gewünschten radialen Richtungen des kreisförmigen Schlauchquerschnittes ausgerichtet einer Klebevorrichtung in der Schlauch-Rohr-Montagevorrichtung zugeführt werden. Außerdem werden die vorbereiteten Rohre derart ausgerichtet, dass die Klebstoffspur jeweils zur Innenseite des Schutzschlauchs weist. Hierfür werden die Rohre linear in einem geraden, in der Richtung der Längsachse des zu fertigenden Schlauch-Rohr-Systems ausgerichteten Führungsrohr bis unmittelbar vor die Klebevorrichtung geführt. Somit wird ein Verbiegen oder Verformen der beschichteten Rohre wirksam verhindert.

Der Klebevorrichtung der Schlauch-Rohr-Montagevorrichtung wird auch der Schutzschlauch zugeführt und derart die mit einer Klebstoffspur beschichteten Rohre mit ihrer Klebstoffspur an der Innenwand des Schutzschlauchs in der Klebevorrichtung verklebt.

Das Verkleben der Rohre mit dem Schutzschlauch erfolgt in einem kontinuierlichen Prozess unter kontinuierlicher Zufuhr des Schutzschlauchs sowie der zu verklebenden beschichteten Rohre zu einer Klebevorrichtung der Schlauch-Rohr-Montagevorrichtung.

Vorgesehen ist es, die vorbereiteten Rohre gleichmäßig über den Umfang des Schutzschlauchs verteilt angeordnet, also mit einem gleichen Mittelpunktswinkel zwischen den benachbarten Rohren, mit dem Schutzschlauch zu verkleben. Werden beispielsweise 10 Rohre an der Innenseite eines Schutzschlauchs zu einem Schlauch-Rohr-System verklebt, so wird ein Mittelpunktswinkel von 36 Grad gewählt. In einem Beispiel mit 18 Rohren würde der Mittelpunktswinkel 20 Grad betragen. Auf diese Weise erreicht man gleichmäßige Abstände der Rohre untereinander im Schutzschlauch des Schlauch-Rohr-Systems über die gesamte Länge des Schlauch-Rohr-Systems.

Erfindungsgemäß ist weiter eine Verwendung eines derart hergestellten Schlauch-Rohr-Systems mit lagestabilen Rohren als Erdwärmesonde in senkrechten und geneigten Bohrungen vorgesehen. Das erfindungsgemäße Schlauch-Rohr-System ist besonders zum Einsatz als Erdwärmesonde geeignet, da einerseits ein guter Schutz der Rohre im Schlauch-Rohr-System und andererseits eine gute Wärmeübertragung vom Erdreich auf die Rohre der Erdwärmesonde erreicht wird. Zusätzlich wird durch die gleichmäßige Anordnung der Rohre im Schutzschlauch auch eine geringe gegenseitige Beeinflussung sichergestellt.

Das erfindungsgemäße Schlauch-Rohr-System wird bei der Herstellung durch ein Hinzufügen eines Zentralrohrs und eines Verfüllrohrs zu einer für einen Einsatz in einer Tiefenbohrung geeigneten Erdwärmesonde vervollständigt. Hierbei werden das Zentral- und Verfüllrohr jeweils separat im Inneren des Schutzschlauchs angeordnet und müssen nicht mit dem Schutzschlauch verbunden sein.

Bei einer Anwendung der Erfindung für einen Fall, in welchem eine Funktion eines Schutzschlauchs für die Rohre nicht erforderlich ist, können die Rohre auf der Außenseite des Schutzschlauchs angebracht werden, so dass nur die Funktion zur Positionierung der Rohre an einem Schlauch genutzt wird.

Nachfolgend werden wesentliche, durch die Erfindung erreichbare Vorteile dargestellt:
1. Mehrere Rohre, welche bevorzugt Kunststoffrohre sind, werden in einem kontinuierlichen Verfahren an die Innenseite eines auch als Gewebeschlauch bezeichneten Schutzschlauchs geklebt und somit dort dauerhaft befestigt.
2. Das Verfahren kann auf eine verschiedene Anzahl von beschichteten Rohren bzw. Leitungen und bei verschiedenen Längen und Durchmessern eines Schutzschlauchs angewandt werden.
3. Das Schlauch-Rohr-System ist für den Einsatz als Erdwärmesonde vorgesehen.
4. Die geringe Ausdehnung (Materialstärke) der Klebeverbindung und die lagesichernde Verklebung der beschichteten Rohre über die gesamte Länge mit dem Schutzschlauch stellen eine optimale Verbindung von Wärmequelle (Erdreich) zum Wärmetauscher (Rohrbündel), der Erdwärmesonde, sicher.
5. Die Wärmeleitfähigkeit des Füll- oder Verfüllmaterials hat bei einem Einsatz der vorliegenden Erfindung einen unwesentlichen Einfluss auf den Wärmeentzug aus dem Erdreich. Materialeigenschaften des Füllmaterials, wie Frost-Tau-Wechsel-Beständigkeit, Durchlässigkeit, Beständigkeit gegenüber dem geogenen Umfeld, Festigkeit usw., können ohne Berücksichtigung der Wärmeleiteigenschaften zur Sicherung des Grundwasserschutzes zur Anwendung kommen.
6. Eigenschaften des Füllmaterials von handelsüblichen Standardprodukten mit Wärmeleitfähigkeiten von ca. 0,8 W/mK sind vorteilhaft bei Ringrohrsonden, da die Rücklaufleitung von den Vorlaufleitungen isoliert wird und Wärmeverluste auf dem Weg nach oben verringert werden.
7. Die Klebeverbindung hat gegenüber einer Verbindung mit Befestigungslaschen den Vorteil, dass sie keine zusätzlichen Bauteile benötigt. Somit können auch keine Störeffekte durch diese zusätzlichen Bauteile im Bohrloch oder der Erdwärmesonde auftreten.
8. Die Klebeverbindung hat gegenüber einer Verbindung mit Befestigungslaschen weiterhin den Vorteil, dass der Schutzschlauch durch die Befestigungslaschen nicht beschädigt werden kann. Somit können keine unvorhersehbaren Undichtheiten im Schutzschlauch auftreten.
9. Das Schlauch-Rohr-System bietet für die Rohre einen zusätzlichen Schutz, so dass das Risiko einer Rohrbeschädigung vernachlässigbar ist.
10. Das Schlauch-Rohr-System kann für alle Mehrrohranwendungen eingesetzt werden. Bei Erdwärmesonden trifft das beispielsweise auch für Einfach- und Doppel-U-Rohr-Sonden zu.
11. Für das Schlauch-Rohr-System kommen dehnbare und relativ unflexible Gewebeschläuche als Schutzschläuche zur Anwendung. Diese dehnbaren Schutzschläuche sind besonders bei variierenden Bohrdurchmessern und bei dem Einsatz in Verbindung mit Pfahlgründungen (Energiepfähle) vorgesehen.
12. Vorrangig werden Schutzschläuche eingesetzt, die nicht hermetisch dicht sind, so dass das Füllmaterial zwar den Schlauch aufbläht, aber doch Material zwischen Schlauch und Bohrlochwand eindringen lässt. Diese Eigenschaft ist besonders für Energiepfähle von Interesse.
13. Großvolumige Erdaushübe können mit einem Erdwärmesack auch im oberflächennahen Bereich installiert werden. Der Vorteil besteht in der vollständigen Ausnutzung der Kontur, die durch den Bodenaushub entstanden ist.
14. Bei großvolumigen Anwendungen können auch Säcke mit beklebten Rohren verbaut werden, die aus Gewebeteilen bestehen, die in der erforderlichen Form zusammengenäht, geschweißt oder geklebt werden.
15. Mit der Erhöhung der Rohranzahl kann der Rohrdurchmesser und die Wandstärke bei gleicher Druckfestigkeit reduziert werden. Die Wärmeübertragung wird durch diese geometrischen Größen durch Verringerung des Einflusses der geringen Wärmeleitfähigkeit der Rohre verbessert.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:
- Fig. 1:: eine Klebstoffbeschichtungsvorrichtung als erste Teilvorrichtung der Vorrichtung zur Herstellung eines Schlauch-Rohr-Systems,
- Fig. 2a, 2b:: zwei Lagerungsmöglichkeiten der mit der Klebstoffbeschichtungsvorrichtung erzeugten, mit einer Klebstoffspur versehenen Rohre auf einem Trommelkörper,
- Fig. 3:: eine erfindungsgemäße Schlauch-Rohr-Montagevorrichtung als zweite Teilvorrichtung der Vorrichtung zur Herstellung eines Schlauch-Rohr-Systems,
- Fig. 4:: ein Schlauch-Rohr-System in einer Schnittdarstellung,
- Fig. 5:: einen zweiten Trommelhalter und
- Fig. 6:: eine in der Schlauch-Rohr-Montageanordnung angeordnete Klebeanordnung.

Für die Herstellung eines erfindungsgemäßen Schlauch-Rohr-Systems 1, also von Schutzschläuchen 2 mit innen eingeklebten Rohren 3, sind mehrere Verfahrensschritte erforderlich.

Im nachfolgenden Ausführungsbeispiel werden die technologischen Schritte für die Herstellung eines Schlauch-Rohr-Systems 1 beschrieben. Hierzu sind im Wesentlichen zwei Teilvorrichtungen 4 und 5 notwendig.

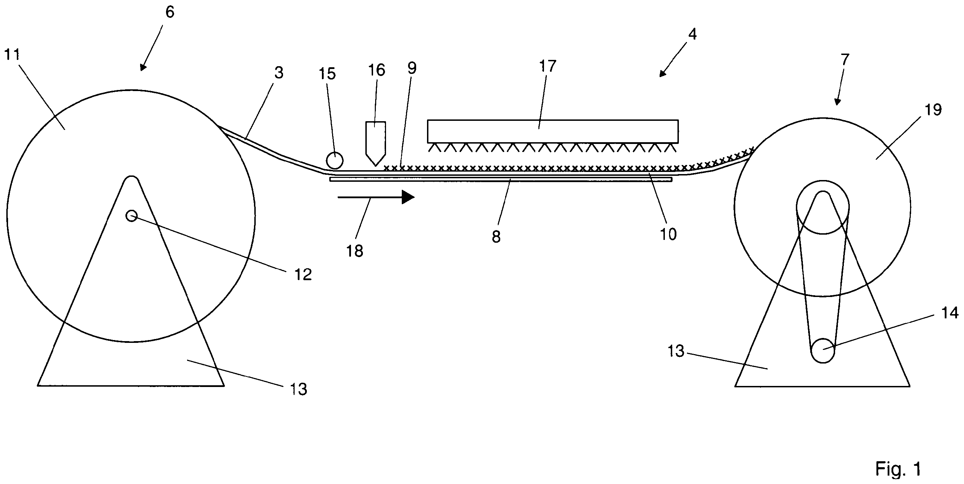

In Figur 1 ist die erste Teilvorrichtung, eine Klebstoffbeschichtungsvorrichtung 4, dargestellt. Sie besteht aus den Hauptkomponenten Vorratstrommel 6, Arbeitstrommel 7, Klebstoffdosierungseinheit 16 und einer Führungsschiene 8.

Die Vorratstrommel 6 ist für die Aufnahme der zu verarbeitenden Rohre 3 vorgesehen. Auf dieser Vorratstrommel 6 werden die Rohre 3 in großen Längen ohne Verdrillung bereitgestellt. Weiterhin wird eine Arbeitstrommel 7 benötigt, die die mit einer Klebstoffspur 9 beschichteten Rohre 10 auf ihrem zweiten Trommelkörper 19 aufnimmt bzw. aufwickelt.

Der Trommelkörper 11 der Arbeitstrommel 6 ist so ausgeführt, dass er in einer Trommelgabel 12 einer Trommelhalterung 13, welche zur Aufnahme einer Trommel vorgesehen ist, eingehängt werden kann. Die Arbeitstrommel 7, welche ebenfalls in einer Trommelhalterung 13 eingehängt werden kann, ist mit einem geschwindigkeitsgesteuerten Trommelantrieb 14 ausgestattet. Die Vorratstrommel 6 und die Arbeitstrommel 7 sind in einem Abstand voneinander aufgestellt, so dass zwischen ihnen die zum Aufbringen einer Klebstoffspur 9 benötigten Mittel angeordnet werden können. In der Regel wird als Klebstoff ein Heißkleber eingesetzt.

Zu diesen Mitteln gehört eine zwischen den Trommeln 6 und 7 angeordnete Führungsschiene 8, welche zur Führung des Rohres 3 während des Auftragens der Klebstoffspur 9 vorgesehen ist. Beispielsweise an dieser Führungsschiene 8 ist eine Messstelle 15 für die Längen- und Geschwindigkeitserfassung des Rohres 3 vorgesehen. Weiterhin ist eine Klebstoffdosierungseinheit 16 sowie optional eine Kühlanordnung 17 in einem Teilbereich entlang der Führungsschiene 8 angeordnet. Die Kühlanordnung 17 wird, betrachtet in der Bewegungsrichtung 18 des Rohres 3 sowie des beschichteten Rohres 10, in einem Bereich nach der Klebstoffdosierungseinheit 16 angeordnet und dient der Deaktivierung des Klebstoffes.

Derart kann das von der Vorratstrommel 6 abgewickelte Rohr 3 mittels der Klebstoffdosierungseinheit 16 mit einer streifenförmigen Klebstoffspur 9 versehen werden, während das Rohr 3 in der Bewegungsrichtung 18 an der Klebstoffdosierungseinheit 16 vorbei transportiert wird. Nach diesem Auftragen der Klebstoffspur 9 auf einen Teil der Oberfläche des Rohres 3 wird die Klebstoffspur 9 im Bereich der Kühlanordnung 17 abgekühlt, bevor das derart vorbereitete Rohr 10 auf die Arbeitstrommel 7 aufgewickelt wird.

Vorgesehen ist es, dass die mittels der Messstelle 15 für die Längen- und Geschwindigkeitserfassung des Rohres 3 gewonnenen Informationen zur Steuerung des Trommelantriebs 14 und somit zur Beeinflussung der Geschwindigkeit des Rohres 3 und 10 beim Beschichtungsvorgang mit der Klebstoffspur 9 genutzt werden. So kann beispielsweise durch ein Verändern der Transportgeschwindigkeit des Rohrs 3 und 10 die Dicke der Klebstoffspur 9 beeinflusst werden, wobei die Dicke der Klebstoffspur 9 mit zunehmender Geschwindigkeit abnimmt.

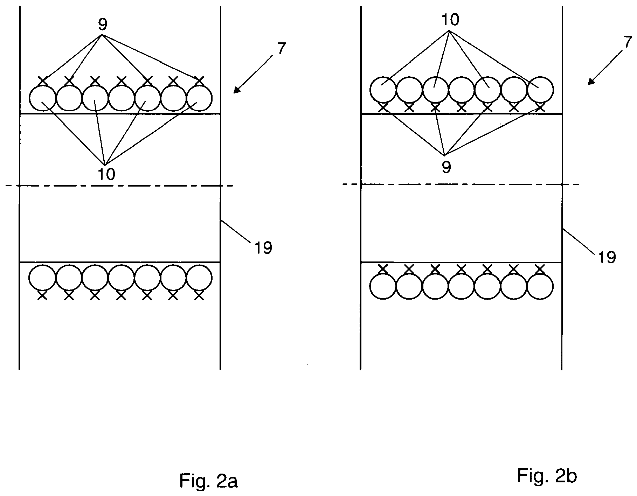

In den Figuren 2a und 2b sind Beispiele für die Anordnung des mit der Klebstoffspur 9 beschichteten Rohrs 10 auf der Arbeitstrommel 7 dargestellt. Wie in der Figur 2a gezeigt, kann das beschichtete Rohr 10 auf dem zweiten Trommelkörper 19 der Arbeitstrommel 7 derart aufgewickelt werden, dass die Klebstoffspur 9 nach außen zeigt. In der Alternative der Figur 2b ist das beschichtete Rohr 10 auf dem zweiten Trommelkörper 19 der Arbeitstrommel 7 derart aufgewickelt, dass die Klebstoffspur 9 nach innen zeigt, also gegenüber der Darstellung der Figur 2a um 180 Grad gedreht ist.

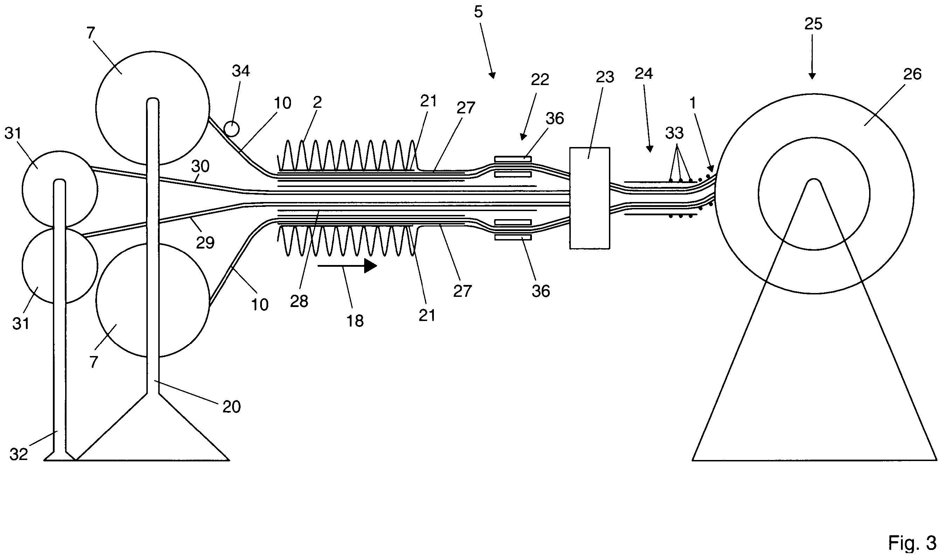

In der Figur 3 ist eine erfindungsgemäße Schlauch-Rohr-Montagevorrichtung 5 als zweite Teilvorrichtung der Vorrichtung zur Herstellung eines Schlauch-Rohr-Systems 1 gezeigt.

Die Schlauch-Rohr-Montagevorrichtung 5 umfasst eine zweite Trommelhalterung 20, welche mehrere jeweils mit einem beschichteten Rohr 10 versehene Arbeitstrommeln 7 aufnehmen kann. Auch wenn in der Prinzipdarstellung der Figur 3 nur zwei Arbeitstrommeln 7 auf der zweiten Trommelhalterung 20 dargestellt sind, wird die Trommelhalterung 20 derart ausgeführt, dass diese alle benötigten Arbeitstrommeln 7, beispielsweise 10 Stück in einem Schlauch-Rohr-System mit 10 Rohren, bedarfsgerecht ausgerichtet aufnehmen kann.

Weiterhin vorgesehen ist es, eine Schutzschlauchhalterung 21 zur Aufnahme des Schutzschlauchs 2 und für seine Bevorratung eine Klebevorrichtung 22 mit mehreren Klebeanordnungen 36, eine Schweißvorrichtung 23, eine Konfektionierung 24 sowie eine Wickeleinheit 25 für das Aufwickeln des Schlauch-Rohr-Systems 1 auf eine Trommel 26 für das fertige Schlauch-Rohr-System 1 bereitzustellen. Weiterhin wird eine Antriebseinheit zum Antreiben der Trommel 26 bereitgestellt, welche in der Prinzipdarstellung der Figur 3 nicht gezeigt ist.

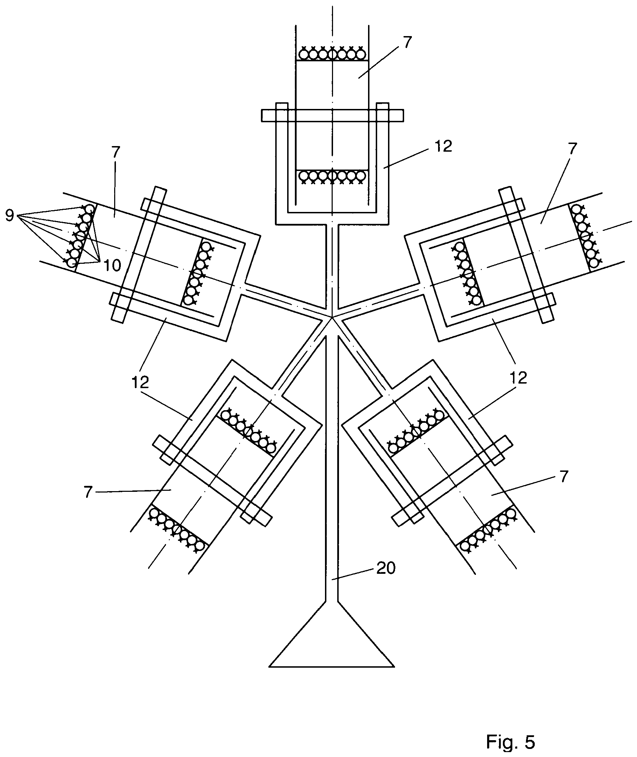

Wie später in der Figur 5 noch genauer gezeigt wird, nimmt der zweite Trommelhalter 20 die vorbereiteten Arbeitstrommeln 7 mit den beschichteten Rohren 10 derart auf, dass die Klebespur 9 der Rohre 10 auf den gewünschten Mittelpunktswinkel des kreisförmigen Schlauchquerschnittes treffen. Diese ausgerichteten, beschichteten Rohre 10 werden von jeder Arbeitstrommel 7 auf dem zweiten Trommelhalter 20 in das Innere des Schutzschlauchhalters 21 zwangsweise bis zur Klebevorrichtung 22, beispielsweise über je eine Leitvorrichtung 27 auf geradem Weg, idealerweise auf einer Linie, geführt.

Hierbei wird für jedes beschichtete Rohr 10 jeweils eine Leitvorrichtung 27 angeordnet und verwendet. Die Leitvorrichtungen 27, der Schutzschlauchhalter 21 und die Klebevorrichtung 22 sind auf einem zentral angeordneten Führungsrohr 28 montiert. In diesem Führungsrohr 28 werden weitere Rohre und Leitungen wie das Zentralrohr 29 und das Verfüllrohr 30 mitgeführt, die nicht mit dem Schutzschlauch 2 verbunden werden, das fertige Schlauch-Rohr-System 1 jedoch zu einer einsatzfähigen Erdwärmesonde komplettieren.

Vorgesehen ist es auch, dass das Zentralrohr 29 und das Verfüllrohr 30 von einer jeweiligen weiteren Trommel 31 abgewickelt und der Schlauch-Rohr-Montageanordnung 5 kontinuierlich zugeführt werden, wobei die weiteren Trommeln 31 auf einem dritten Trommelhalter 32 angeordnet werden.

Der Schlauchhalter 21 wird vor dem Einführen der beschichteten Rohre 10 in die Leitvorrichtungen 27, also vor dem Beginn der Herstellung eines Schlauch-Rohr-Systems 1, beispielsweise von einer Schlauchvorratstrommel mit dem Schutzschlauch 2 in der gesamten benötigten Länge des Schlauch-Rohr-Systems 1 bestückt. Hierbei wird der Schutzschlauch 2 in einer zusammengestauchten oder zusammengefalteten Form auf dem Schlauchhalter 21 angeordnet.

Derart kann es sichergestellt werden, dass die Herstellung des Schlauch-Rohr-Systems 1 in der benötigten Gesamtlänge in einem kontinuierlichen Arbeitsvorgang erfolgt. Bei diesem kontinuierlichen Arbeitsvorgang werden sowohl der Schutzschlauch 2 und die beschichteten Rohre 10 kontinuierlich durch die Schlauch-Rohr-Montageanordnung 5 transportiert, als auch kontinuierlich in einer Klebevorrichtung 22 an den vorgesehenen Stellen an der Innenwand des Schutzschlauchs 2 miteinander fest verklebt.

Nach dem Einführen der beschichteten Rohre 10 in die Leitvorrichtungen 27 treten diese beim Transport in der Bewegungsrichtung 18 durch die Leitvorrichtung 27 am Ende des Schlauchhalters 21 in der Ausrichtung der Klebstoffspur 9 bzw. des Mittelpunktswinkels aus, wie sie durch die Ausrichtung der Arbeitstrommel 7 in der zweiten Trommelhalterung 20 vorgegeben wurde. Das heißt, mit der Ausrichtung der Arbeitstrommel 7 auf der zweiten Trommelhalterung 20 wird der Winkel der Ausrichtung der Klebstoffspur 9 auf dem beschichteten Rohr 10 bestimmt, wobei die Klebstoffspur 9 zur Innenwand des Schutzschlauchs 2 ausgerichtet werden muss, um ein Verkleben der beschichteten Rohre 10 mit der Innenwand des Schutzschlauchs 2 in der Klebevorrichtung 22 in einem kontinuierlichen Arbeitsvorgang zu ermöglichen.

Die Schlauch-Rohr-Montageanordnung 5 weist auch eine Schweißvorrichtung 23 auf, mit welcher die Enden der Rohre 10 und das Ende des Zentralrohres 29 mittels eines sogenannten Sondenfußes verbunden bzw. verschweißt werden können.

Nach der Schweißvorrichtung 23 ist, betrachtet in der Bewegungsrichtung 18 des Rohres 10, eine Konfektionierung 24 des Schlauch-Rohr-Systems 1 vorgesehen. In dieser können im Umfangsbereich des Schlauch-Rohr-Systems 1 beispielsweise Gummibänder 33 angeordnet werden. Mittels derartiger Gummibänder 33 kann der Durchmesser des gefertigten Schlauch-Rohr-Systems 1 vor einem Aufwickeln auf die Trommel 26 verringert werden. Gleichzeitig ermöglichen diese Gummibänder 33 eine Erweiterung des Umfangs des Schlauch-Rohr-Systems 1 nach einem Einbringen in eine Tiefenbohrung während eines Zuführens von Füllstoff in das Schlauch-Rohr-System 1, beispielsweise über ein Verfüllrohr 30.

Vorgesehen ist es auch, mindestens einen Geschwindigkeitsmesser 34 anzuordnen, mit welchem die Transportgeschwindigkeit der beschichteten Rohre 10 gemessen wird. Dieser Messwert kann beispielsweise von einer nicht dargestellten zentralen Steuereinheit zur Steuerung der Geschwindigkeit bzw. Drehzahl der Trommel 26 genutzt werden.

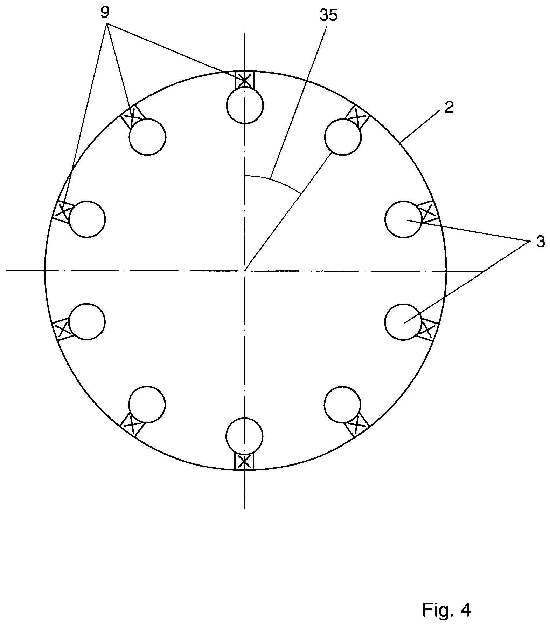

In der Figur 4 ist ein erfindungsgemäßes, mit der ersten und der zweiten Teilvorrichtung 4 und 5 erzeugtes Schlauch-Rohr-System 1 in einer Schnittdarstellung dargestellt.

In dem in der Figur 4 dargestellten Beispiel sind 10 beschichtete Rohre 10 gleichmäßig im Umfang des Innendurchmessers des Schutzschlauchs 2 verteilt angeordnet und mit dem Schutzschlauch 2 mit der zweiten Teilvorrichtung 5 verschweißt worden. Hierbei wurden die beschichteten Rohre 10 der Klebevorrichtung 22 der zweiten Teilvorrichtung 5 derart zugeführt, dass die Klebstoffspur 9 der beschichteten Rohre 10 jeweils zum Schutzschlauch 2 hin ausgerichtet ist.

Die beschichteten Rohre 10 werden in diesem Beispiel jeweils um den Mittelpunktswinkel 35 von 36° versetzt angeordnet. Es besteht aber auch die Möglichkeit, die Rohranordnung über den Vollkreis des Schutzschlauchs 2 nach anderen Kriterien vorzunehmen. Die Dimensionierung der Rohre 10 kann sowohl bezüglich der Rohranzahl, der Rohrdurchmesser und auch der Länge des Schlauch-Rohr-Systems 1 an entsprechende Anforderungen angepasst werden.

In der Figur 5 ist ein Beispiel für einen zweiten Trommelhalter 20 dargestellt, welcher Bestandteil der Schlauch-Rohr-Montageanordnung 5 ist. Das Beispiel zeigt einen zweiten Trommelhalter 20, an welchem 5 Arbeitstrommeln 7 sternförmig in einer Ebene angeordnet sind.

Der Trommelhalter 20 nimmt die Arbeitstrommel 7 mit den vorbereiteten, beschichteten Rohren 10 derart auf, dass die beschichteten Rohre 10 mit ihrer jeweiligen Klebstoffspur 9 auf den gewünschten Mittelpunktswinkel des kreisförmigen Schlauchquerschnittes des Schutzschlauchs 2 ausgerichtet sind. Derart können die beschichteten Rohre 10 ohne ein Verdrehen durch die zweite Teilvorrichtung 5 in den Führungsrohren 28 geführt werden und gelangen mit einer zum Verkleben der Rohre 10 mit dem Schutzschlauch 2 benötigten Ausrichtung der Klebstoffspur 9 bis zur Klebevorrichtung 22.

Der Trommelhalter 20 weist für jede Arbeitstrommel 7 eine Trommelgabel 12 auf, in welche die jeweilige Arbeitstrommel 7 eingehängt und arretiert werden kann.

Im Beispiel der Figur 5 ist an einer der Arbeitstrommeln 7 das aufgewickelte beschichte Rohr 10 dargestellt, welches in dieser Darstellung mit der Klebstoffspur 9 nach außen aufgewickelt worden ist.

Bei der Notwendigkeit der Erzeugung eines Schlauch-Rohr-Systems 1 mit mehr als 5 Rohren sind entsprechend mehr Arbeitstrommeln 7 anzuordnen. In einem Beispiel mit 10 benötigten Rohren 10 kann der zweite Trommelhalter 20 beispielsweise zwei Ebenen mit jeweils 5 Arbeitstrommeln 7 aufnehmen. Hierbei ist es vorgesehen, dass die Arbeitstrommeln 7 der zweiten Ebene gegenüber den Arbeitstrommeln 7 der ersten Ebene um einen Winkel verdreht angeordnet werden. Während die Arbeitstrommeln 7 in der ersten und der zweiten Ebene um einen Winkel von 72 Grad zueinander ausgerichtet angeordnet sind, ist die erste Ebene zur zweiten Ebene um einen Winkel von 36 Grad verdreht angeordnet. Derart können die 10 beschichteten Rohre 10 der Schlauch-Rohr-Montageanordnung 5 bereits richtig, über den Umfang des Schutzschlauchs 2 verteilt, ausgerichtet zugeführt werden. Ein derartiges Beispiel mit 10 Arbeitstrommeln 7 ist in den Figuren nicht dargestellt.

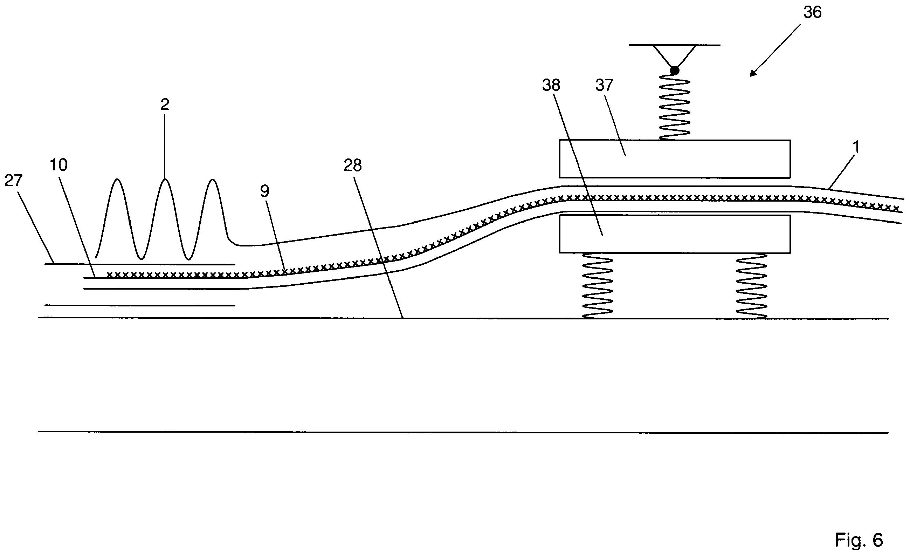

In der Figur 6 ist eine in der Klebevorrichtung 22 angeordnete Klebeanordnung 36 der Schlauch-Rohr-Montageanordnung 5 gezeigt.

Die Klebevorrichtung 22 weist für jedes mit dem Schutzschlauch 2 zu verklebende vorbereitete Rohr 10 eine separate Klebeanordnung 36 auf, welche kontinuierlich, das heißt bei einem kontinuierlichen Transport des Schutzschlauchs 2 und der beschichteten Rohre 10, betrieben wird. Diese Klebeanordnungen 36 sind ebenfalls nach dem Mittelpunktswinkel der zu erzeugenden Klebestelle zwischen dem Rohr 10 und dem Schutzschlauch 2 ausgerichtet und entlang eines Umfangsbereichs des zu verarbeitenden Schutzschlauchs 2 angeordnet.

Eine dieser Klebeanordnungen 36 der Klebevorrichtung 22 ist in der Figur 6 beispielhaft dargestellt. Das mit der Klebstoffspur 9 beschichtete Rohr 10 gelangt über die Leitvorrichtung 27 kontinuierlich zur Klebeanordnung 36. Gleichzeitig wird der Klebeanordnung 36 der Schutzschlauch 2 kontinuierlich zugeführt. In der Klebeanordnung 36 wird das beschichtete Rohr 10 mit seiner Klebstoffspur 9 mit dem Schutzschlauch 2 zusammengepresst und an der Stelle der Klebstoffspur 9 erwärmt. Zu diesem Zweck umfasst die Klebeanordnung 36 ein Heizelement 37 sowie ein Andrückelement 38. Infolge des beschriebenen Vorgangs geht das Rohr 10 eine dauerhafte Verbindung mit dem Schutzschlauch 2 ein. Dieser Vorgang erfolgt zeitgleich an allen Klebeanordnungen 36 der Klebevorrichtung 22, wobei das fertige Schlauch-Rohr-System 1 erzeugt wird.

Das erfindungsgemäß hergestellte fertige Schlauch-Rohr-System 1 zeichnet sich durch eine feste Verbindung der Rohre 10 mit dem Schutzschlauch 2, also einer besonderen Stabilität, aus. Somit wird ein Verschieben oder Verrutschen des Schutzschlauchs 2 entlang der Rohre 10, beispielsweise bei einem Einbringen des fertigen Schlauch-Rohr-Systems 1 in eine Tiefenbohrung, sicher verhindert.

Wie bereits zur Figur 3 beschrieben, umfasst das fertige Schlauch-Rohr-System 1 auch die üblichen Elemente wie ein Zentralrohr 29 und ein Verfüllrohr 30, welche dem Schlauch-Rohr-System 1 über das Führungsrohr 28 zugeführt werden, was in der Figur 6 nicht dargestellt ist.

Bei einer gleichmäßigen Verteilung der beschichteten Rohre 10 im Umfang des Schutzschlauchs 2 ist die Ausrichtung so vorzunehmen, dass der Mittelpunktswinkel 35 dem Bruchteil des Vollkreises (360 Grad), bezogen auf die Anzahl der in das Schlauch-Rohr-System 1 einzubringenden Rohre 10, entspricht. Im Beispiel mit zehn beschichteten Rohren 10 im Umfang des Schutzschlauchs 2 beträgt der Mittelpunktswinkel 35 somit 36 Grad, bei zwanzig beschichteten Rohre 10 18 Grad usw. Auf diese Weise erreicht man gleichmäßige Abstände der Rohre 10 untereinander am Schutzschlauch 2. Die Anordnung mit einer gleichmäßigen Verteilung der Rohre 10 wird in der Regel gewählt.

Der technologische Ablauf zur Herstellung eines Schlauch-Rohr-Systems 1 mit innen befestigten Rohren 10 erfordert mehrere Verfahrensschritte. Bevor die beschichteten Rohren 10 in den Schutzschlauch 2 eingebracht und mit diesem verklebt werden, müssen Rohre 3 in einem vorhergehenden Schritt mit einer Klebstoffspur 9 versehen und derart beschichteten Rohre 10 bereitgestellt werden.

Dieser vorbereitende Verfahrensschritt erfolgt in einer ersten Teilvorrichtung 4, welche auch als Klebstoffbeschichtungsvorrichtung 4 bezeichnet wird. Für die Verklebung wird vorzugsweise ein Heißklebstoff verwendet, der die Materialien des vorbereiteten Rohrs 10 mit dem Schutzschlauch 2 fest verbinden kann. Die Verklebung ermöglicht eine Verbindung von Rohr 10 und Schutzschlauch 2 auch für den Fall, dass beide aus unterschiedlichen Materialien bestehen.

Im ersten Schritt wird das vorgesehene Rohr 3 von einer Vorratstrommel 6 abgewickelt, in der Klebstoffbeschichtungsvorrichtung 4 mit dem Aufbringen der Klebstoffspur 9 zu einem beschichteten Rohr 10 verarbeitet und auf den zweiten Trommelkörper 19 der Arbeitstrommel 7 nach Deaktivierung des Klebstoffes aufgewickelt. Bei diesem Vorgang wird parallel zur Verarbeitung des Rohr 3 mit einer Messstelle 15 eine Längenmessung durchgeführt und die exakt festgelegte, benötigte Länge des beschichteten Rohres 10 bestimmt und hergestellt.

Die abgelängten Rohre 10 werden auf Arbeitstrommeln 7 für das aktuell herzustellende Schlauch-Rohr-System 1 aufgewickelt. Für den nachfolgenden Schritt ist es erforderlich, dass entsprechend der Anzahl der im Schlauch-Rohr-System 1 vorgesehenen Rohre 10 auch die gleiche Anzahl von mit je einem Rohr 10 versehenen Arbeitstrommeln 7 bereitgestellt werden.

Eine Voraussetzung für die funktionsgerechte Herstellung bzw. Bereitstellung der beschichteten Rohre 10 auf den Arbeitstrommeln 7 besteht in einer verdrillungsfreien Bestückung der Arbeitstrommeln 7 und einer verdrillungsfreien Führung des Rohres 3 durch die Klebstoffbeschichtungsvorrichtung 4 bis zum Aufwickeln des hergestellten Rohres 10 auf die Arbeitstrommel 7. Dies wird erreicht, indem die beiden Trommeln 6 und 7 mit parallel zueinander ausgerichteten Achsen aufgestellt werden und das Rohr 3 über eine gerade Führungsschiene 8 während der Beschichtung mit der Klebstoffspur 9 geführt wird.

Der Wickelprozess des beschichteten Rohres 10 wird über die Antriebsgeschwindigkeit der Arbeitstrommel 7 gesteuert. Die Steuerung erhält die Messgröße des Längen- und Geschwindigkeitsmessers 15 des Rohrtransportes. Das beschichtete Rohr 10 wird mit einer konstanten Geschwindigkeit über die Führungsschiene 8 bewegt, so dass die Klebstoffdosierungseinheit 16 eine gleichmäßige Klebstoffspur 9 über die gesamte Länge des Rohres 10 aufbringt. Es versteht sich, dass mit der Sprührate des Klebstoffes aus der Düse der Klebstoffdosierungseinheit 16 und der Ziehgeschwindigkeit des Rohres 10 die Dimensionen der Klebstoffspur 9 festgelegt bzw. beeinflusst werden.

Durch die Steuerung einer Betriebsdauer der Auftragdüse der Klebstoffdosierungseinheit 16 wird die Länge der Klebstoffspur 9 bzw. werden ihre Längenabschnitte festgelegt. Die Unterbrechungen der Klebstoffspur 9 werden so auf wenige Zentimeter gewählt, dass die Verbindung zum Schutzschlauch 2 stabil bleibt und sich der Abstand zwischen Rohr 10 und Schutzschlauch 2 an den nicht verklebten Abschnitten nicht vergrößert.

Die Steuerung der Geschwindigkeit des Transports des Rohrs 10 wird so vorgenommen, dass auf der verfügbaren Länge der Führungsschiene 8 der Heißklebstoff soweit abgebunden ist, dass die beschichteten Rohre 10, ohne untereinander zu verkleben, in mehreren Lagen auf die Arbeitstrommel 7 aufgewickelt werden können. Der Abkühlprozess kann unter Nutzung einer Kühlanordnung 17, welche beispielsweise Kaltluft bereitstellt, unterstützt werden. Auf die Arbeitstrommeln 7 ist das Rohr 10 mit der Klebstoffspur 9 in der gewünschten Länge so aufgewickelt, dass die Klebstoffspur 9, wie in Figur 2 dargestellt, nach außen oder nach innen zeigen kann.

Die Arbeitstrommeln 7 werden nach der Bestückung mit den beschichteten Rohren 10 so auf die Trommelgabeln 12 des zweiten Trommelhalters 20 eingehängt, dass die Klebstoffspur 9 in der Klebevorrichtung 22 jeweils ausgerichtet zur Innenseite des Schutzschlauchs 2 ankommt. Dies wird durch eine gerade Führung der beschichteten Rohre 10 in Leitvorrichtungen 27 gewährleistet. Das gilt für die Anordnung aller Arbeitstrommeln 7 auf dem zweiten Trommelhalter 20 jeweils mit der benötigten Richtungsänderung um den Mittelpunktswinkel 35. In der Regel werden bis zu 12 Arbeitstrommeln 7 verwendet, so dass sie bei einer Anwendung von 12 Rohren 10 mit einer Richtungsänderung des Mittelpunktswinkels 35 von 30 Grad versetzt zueinander auf dem zweiten Trommelhalter 20 montiert werden müssen.

Mit mehreren in der Klebevorrichtung 22 angeordneten Klebeanordnungen 36 werden die beschichteten Rohre 10 mit ihrer Klebstoffspur 9 mit einem Andrückelement 38 gegen den Schutzschlauch 2 gepresst, so dass sich die Rohre 10 mit dem Schutzschlauch 2 berühren. Die oben beschriebene Ausrichtung der Rohre 10 sorgt dafür, dass die Klebstoffspur 9 an der gewünschten Stelle des Schutzschlauchs 2 positioniert wird. An den Positionen der Rohre 10 werden auf der Gegenseite von außen auf den Schutzschlauch 2 Heizelemente 37 angedrückt. Mit diesen Heizelementen 37 wird es erreicht, dass der Heißkleber verflüssigt und wieder aktiviert wird und mittels seiner Klebeeigenschaften eine Verbindung zwischen einem beschichteten Rohr 10 und dem Schutzschlauch 2 ermöglicht.

Die Anzahl der Heizelemente 37 und der Andrückelemente 38 wird durch die Anzahl der Rohre 10 bestimmt, welche in dem Schlauch-Rohr-System 1 angeordnet werden sollen. Dieser Klebeprozess wird kontinuierlich während des Transportes des Schutzschlauchs 2 sowie der Rohre 10 durch die Schlauch-Rohr-Montageanordnung 5 betrieben. Der Transport wird beispielsweise durch die Wickeleinheit 25 angetrieben. Die Transportgeschwindigkeit wird über den Geschwindigkeitsmesser 34 überwacht. In Abhängigkeit der Transportgeschwindigkeit und der Temperatur der Heizelemente 37 wird die Qualität der Klebeverbindung gesteuert.

Das Schlauch-Rohr-System 1 wird in der Konfektionierung 24 mit Gummibändern 33 auf einen kleinen Durchmesser zusammengeschnürt. Nach dieser Konfektionierung 24 wird das Schlauch-Rohr-System 1 auf eine Trommel 26 für das fertige Schlauch-Rohr-System aufgetrommelt bzw. aufgewickelt.

An den Enden des Schlauch-Rohr-Systems 1 werden bei einer Anwendung als Erdwärmesonde die Rohre 10 mit Formteilen mittels einer Schweißvorrichtung 23 verbunden. Hierbei werden die freien Enden der Rohre 10 und das Ende des Zentralrohres 29 in die Schweißvorrichtung 23 eingespannt und mit einem Formteil, dem sogenannten Sondenfuß, verschweißt. Auf der anderen Seite werden nur die freien Enden der Rohre 10 mit einem weiteren Formteil, dem sogenannten Sammler, verschweißt. Diese Schweißvorgänge finden vor bzw. nach dem kontinuierlichen Verkleben der Rohre 10 mit dem Schutzschlauch 2 statt.

Für übliche Erdwärmesonden werden in der Regel Schlauch-Rohr-Systeme 1 mit einer Länge zwischen 30 m und 150 m angefertigt. Bei der Anwendung des Schlauch-Rohr-Systems 1 in sehr tiefen Bohrungen sind bei der Verwendung von geringdurchlässigen Schutzschläuchen 2 Druckausgleichsöffnungen in regelmäßigen Abständen vorzusehen. Mit diesem Druckausgleich wird die Belastung des hydrostatischen Druckes auf den Schutzschlauch 2 reduziert.

Dieses Schlauch-Rohr-System 1 wird mit Gummiringen oder Gummibändern 33 zusammengehalten und als Erdwärmesonde in eine mit Bohrspülung gefüllte Bohrung eingebracht. Die Erdwärmesonde nimmt so einen kleinen Durchmesser des Bohrloches in Anspruch und kann ohne Behinderungen eingebaut werden. Nach Erreichen der Endtiefe der Erdwärmesonde wird der Schutzschlauch 2 mit Füll- oder Verfüllmaterial, beispielsweise unter Nutzung des Verfüllrohrs 30, gefüllt und bläht sich dabei in seinem Durchmesser bis an die Bohrlochwand der Tiefenbohrung auf. Die Größe des Schutzschlauches wird so gewählt, dass sie eine unterschiedliche Ausdehnung des Bohrloches erreicht. Die fest mit dem dehnbaren Schutzschlauch 2 verklebten Rohre 10 werden auch mit zur Bohrlochwand geführt und liegen nach dem Verfüllen fest an der Bohrlochwand an. Nach dem Abbinden der Baustoffsuspension sind die Rohre 10 funktionsgerecht und thermodynamisch optimiert an der Bohrlochwand fixiert. Da mit ca. 1mm nahezu kein Abstand zwischen den Rohren 10 und der Bohrlochwand vorhanden ist, kann der Wärmeentzug aus dem Erdreich optimal erfolgen. Eine Verminderung des Wärmeentzugs aus dem Erdreich durch das Füllmaterial ist sicher ausgeschlossen.

Die Anwendung mit großen Schutzschläuchen 2 bietet sich besonders in Schächten, großen Bohrungen und in Aufgrabungen an. Diese Schutzschläuche 2 übernehmen bei gedrungener Geometrie die gleiche Funktion wie langgestreckte Schlauch-Rohr-Systeme. Die Rohre werden mit den Gewebebahnen verbunden. Die Schutzschläuche 2 oder auch Schutzsäcke werden durch verklebte, verschweißte oder vernähte Gewebebahnen hergestellt. Bei der Anordnung der Verbindungsstellen zwischen Gewebebahn und Rohr ist darauf zu achten, dass bei der Endausdehnung des Schutzschlauchs 2 keine Spannung an den Verbindungs- bzw. Klebestellen auftreten und die zulässigen Biegeradien der Rohre 10 nicht unterschritten werden.

### LISTE DER BEZUGSZEICHEN

- 1: Schlauch-Rohr-System
- 2: Schutzschlauch
- 3: Rohr
- 4: erste Teilvorrichtung / Klebstoffbeschichtungsvorrichtung
- 5: zweite Teilvorrichtung / Schlauch-Rohr-Montageanordnung
- 6: Vorratstrommel
- 7: Arbeitstrommel
- 8: Führungsschiene
- 9: Klebstoffspur
- 10: beschichtetes Rohr
- 11: erster Trommelkörper
- 12: Trommelgabel
- 13: Trommelhalter
- 14: Trommelantrieb
- 15: Messstelle / Längen- und Geschwindigkeitsmessung
- 16: Klebstoffdosierungseinheit
- 17: Kühlanordnung
- 18: Bewegungsrichtung Rohr
- 19: zweiter Trommelkörper
- 20: zweiter Trommelhalter
- 21: Schutzschlauchhalterung
- 22: Klebevorrichtung
- 23: Schweißvorrichtung
- 24: Konfektionierung
- 25: Wickeleinheit
- 26: Trommel für Schlauch-Rohr-System
- 27: Leitvorrichtung
- 28: Führungsrohr
- 29: Zentralrohr
- 30: Verfüllrohr
- 31: weitere Trommel
- 32: dritter Trommelhalter
- 33: Gummiband
- 34: Geschwindigkeitsmesser
- 35: Mittelpunktswinkel
- 36: Klebeanordnung
- 37: Heizelement
- 38: Andrückelement

## Patentansprüche

1. Schlauch-Rohr-System (1), welches mehrere Rohre (10) zur Aufnahme von Wärme aus einem Erdreich aufweist, wobei die Rohre (10) innerhalb eines Schutzschlauchs (2) angeordnet sind, **dadurch gekennzeichnet, dass** die Rohre (10) an einer Innenseite des Schutzschlauchs (2) und mit dem Schutzschlauch (2) mittels einer zumindest teilweise auf einer Oberfläche der Rohre (10) angeordneten Klebstoffspur (9) verklebt angeordnet sind.

2. Schlauch-Rohr-System (1) nach Anspruch 1, **dadurch gekennzeichnet, dass** die Klebstoffspur (9) streifenförmig in Abschnitten oder vollständig über eine gesamte Länge des Rohres (10) angeordnet ist.

3. Schlauch-Rohr-System (1) nach Anspruch 1 oder 2, **dadurch gekennzeichnet, dass** in dem Schlauch-Rohr-System (1) ein Zentralrohr (29) und ein Verfüllrohr (30) angeordnet sind.

4. Schlauch-Rohr-System (1) nach einem der Ansprüche 1 bis 3, **dadurch gekennzeichnet, dass** die Rohre (10) an der Innenseite des Schutzschlauchs (2) gleich beabstandet voneinander angeordnet sind, wobei sich zwischen zwei benachbarten Rohren (10) immer ein gleicher Mittelpunktswinkel (35) ergibt.

5. Vorrichtung zur Herstellung eines Schlauch-Rohr-Systems (1), welches mehrere Rohre (10) zur Aufnahme von Wärme aus einem Erdreich aufweist, **dadurch gekennzeichnet, dass** die Vorrichtung eine Klebstoffbeschichtungsvorrichtung (4) zum Beschichten von Rohren (3) mit einer Klebstoffspur (9), wobei beschichtete Rohre (10) erzeugt und auf einer Arbeitstrommel (7) aufgewickelt werden, und eine Schlauch-Rohr-Montageanordnung (5) zum Verkleben mehrerer dieser beschichteten Rohre (10) mit einer Innenseite eines Schutzschlauchs (2) aufweist.

6. Vorrichtung nach Anspruch 5, **dadurch gekennzeichnet, dass** die Schlauch-Rohr-Montageanordnung (5) einen zweiten Trommelhalter 20 mit mehreren Trommelgabeln (12) zur Aufnahme je einer Arbeitstrommel (7) aufweist, wobei die Trommelgabeln (12) in einer oder in mehreren Ebenen angeordnet sind.

7. Vorrichtung nach Anspruch 5 oder 6, **dadurch gekennzeichnet, dass** in der Schlauch-Rohr-Montageanordnung (5) eine Schutzschlauchhalterung (21) zur Bevorratung und Führung des Schutzschlauchs (2) angeordnet ist und dass in dieser Schutzschlauchhalterung (21) mehrere Leitvorrichtungen (27) zum Führen der beschichteten Rohre (10) angeordnet sind.

8. Vorrichtung nach einem der Ansprüche 5 bis 7, **dadurch gekennzeichnet, dass** in der Schlauch-Rohr-Montageanordnung (5) eine Klebevorrichtung (22) mit mehreren Klebeanordnungen (36) angeordnet ist, wobei die Klebeanordnungen (36) je ein Heizelement (37) und ein Andrückelement (38) aufweisen.

9. Vorrichtung nach einem der Ansprüche 5 bis 8, **dadurch gekennzeichnet, dass** in der Schlauch-Rohr-Montageanordnung (5) eine Schweißvorrichtung (23) und eine Konfektionierung (24) angeordnet sind.

10. Vorrichtung nach einem der Ansprüche 5 bis 9, **dadurch gekennzeichnet, dass** innerhalb der Schutzschlauchhalterung (21) ein Führungsrohr (28) zum unabhängigen Führen eines Zentralrohrs (29) sowie eines Verfüllrohrs (30) angeordnet sind.

11. Verfahren zur Herstellung eines Schlauch-Rohr-Systems (1), welches mehrere Rohre (10) zur Aufnahme von Wärme aus einem Erdreich aufweist, bei welchem mehrere Rohre (3) in einem Schutzschlauch (2) angeordnet werden, **dadurch gekennzeichnet, dass** in einem ersten Verfahrensschritt eine streifenförmige Beschichtung eines Rohrs (3) mittels einer Klebstoffspur (9) auf einer Teiloberfläche des Rohres (3) erfolgt, wobei ein beschichtetes Rohr (10) bereitgestellt wird, dass in einem zweiten Verfahrensschritt mehrere jeweils mit einer Klebstoffspur (9) beschichtete Rohre (10) mit der Innenseite des Schutzschlauchs (2) mittels der Klebstoffspur (9) in einem kontinuierlichen Durchlauf durch eine und unter Nutzung einer Klebevorrichtung (22) verklebt werden.

12. Verfahren nach Anspruch 11, **dadurch gekennzeichnet, dass** nach der Beschichtung des Rohrs (3) mittels der Klebstoffspur (9) im ersten Verfahrensschritt ein Abkühlen der Klebstoffspur (9) und ein Aufwickeln des Rohres (10) mit der abgekühlten Klebstoffspur (9) auf eine Arbeitstrommel (7) durchgeführt wird.

13. Verfahren nach Anspruch 12, **dadurch gekennzeichnet, dass** das beschichtete Rohr (10) mit der Klebstoffspur (9) zu einer Achse der Arbeitstrommel (7) hin oder von dieser weg ausgerichtet auf die Arbeitstrommel (7) aufgewickelt wird.

14. Verfahren nach einem der Ansprüche 11 bis 13, **dadurch gekennzeichnet, dass** eine festgelegte Anzahl beschichteter Rohre (10) mit ihrer Klebstoffspur (9) dem zweiten Verfahrensschritt derart zugeführt werden, dass die Klebstoffspur (9) jedes Rohrs (10) zu einer Innenseite des Schutzschlauchs (2) hin ausgerichtet ist, wobei die Rohre (10) gleichmäßig über einen Innendurchmesser des Schutzschlauchs (2) verteilt zugeführt und verklebt werden.

15. Verfahren nach einem der Ansprüche 11 bis 14, **dadurch gekennzeichnet, dass** bei der Herstellung des Schlauch-Rohr-Systems (1) im zweiten Verfahrensschritt auch ein Zentralrohr (29) und ein Verfüllrohr (30) im Schlauch-Rohr-Systems (1) bereitgestellt werden.

## Claims

1. Hose/tube system (1) having a plurality of tubes (10) for absorbing heat from soil, wherein the tubes (10) are arranged within a protective hose (2), **characterized in that** the tubes (10) are arranged on an inner side of the protective hose (2) and so as to be adhesively bonded to the protective hose (2) by means of an adhesive track (9) which is arranged at least partially on a surface of the tubes (10).

2. Hose/tube system (1) according to Claim 1, **characterized in that** the adhesive track (9) is arranged in a strip-like manner in sections or completely over an entire length of the tube (10).

3. Hose/tube system (1) according to Claim 1 or 2, **characterized in that** a central tube (29) and a filling tube (30) are arranged in the hose/tube system (1).

4. Hose/tube system (1) according to one of Claims 1 to 3, **characterized in that** the tubes (10) are arranged on the inner side of the protective hose (2) spaced apart equally from one another, wherein the same central angle (35) is always obtained between two adjacent tubes (10).

5. Device for producing a hose/tube system (1) having a plurality of tubes (10) for absorbing heat from soil, **characterized in that** the device has an adhesive coating device (4) for coating tubes (3) with an adhesive track (9), wherein coated tubes (10) are produced and wound on a working drum (7), and has a hose/tube assembly arrangement (5) for adhesively bonding a plurality of said coated tubes (10) to an inner side of a protective hose (2) .

6. Device according to Claim 5, **characterized in that** the hose/tube assembly arrangement (5) has a second drum holder (20) with a plurality of drum yokes (12) for holding in each case one working drum (7), wherein the drum yokes (12) are arranged in a plane or in a plurality of planes.

7. Device according to Claim 5 or 6, **characterized in that** a protective hose holder (21) for supply and guidance of the protective hose (2) is arranged in the hose/tube assembly arrangement (5), and **in that** a plurality of guide devices (27) for guiding the coated tubes (10) is arranged in said protective hose holder (21).

8. Device according to one of Claims 5 to 7, **characterized in that** an adhesive-bonding device (22) with a plurality of adhesive-bonding arrangements (36) is arranged in the hose/tube assembly arrangement (5), wherein the adhesive-bonding arrangements (36) each have a heating element (37) and a pressing element (38).

9. Device according to one of Claims 5 to 8, **characterized in that** a welding device (23) and a packaging arrangement (24) are arranged in the hose/tube assembly arrangement (5).

10. Device according to one of Claims 5 to 9, **characterized in that** a guide tube (28) for independent guidance of a central tube (29) and of a filling tube (30) is arranged within the protective hose holder (21).

11. Method for producing a hose/tube system (1) having a plurality of tubes (10) for absorbing heat from soil, in which a plurality of tubes (3) is arranged in a protective hose (2), **characterized in that,** in a first method step, strip-like coating of a tube (3) by means of an adhesive track (9) is realized on a sub-surface of the tube (3), wherein a coated tube (10) is provided, and **in that**, in a second method step, a plurality of tubes (10) which are each coated with an adhesive track (9) is adhesively bonded to the inner side of the protective hose (2) by means of the adhesive track (9) in a continuous passage through, and through use of, an adhesive-bonding device (22).

12. Method according to Claim 11, **characterized in that,** after the coating of the tube (3) by means of the adhesive track (9) in the first method step, cooling of the adhesive track (9) and winding of the tube (10) with the cooled adhesive track (9) onto a working drum (7) are carried out.

13. Method according to Claim 12, **characterized in that** the coated tube (10) is wound onto the working drum (7) with the adhesive track (9) oriented towards an axis of the working drum (7) or away therefrom.

14. Method according to one of Claims 11 to 13, **characterized in that** a defined number of coated tubes (10), with their adhesive tracks (9), are introduced to the second method step in such a way that the adhesive track (9) of each tube (10) is oriented towards an inner side of the protective hose (2), wherein the tubes (10) are introduced, and adhesively bonded, so as to be distributed in a uniform manner over an inner diameter of the protective hose (2).

15. Method according to one of Claims 11 to 14, **characterized in that,** during the production of the hose/tube system (1) in the second method step, a central tube (29) and a filling tube (30) are also provided in the hose/tube system (1).

## Revendications

1. Système tuyau-tube (1), qui comprend plusieurs tubes (10) pour la réception de chaleur issue d'un sol, les tubes (10) étant agencés à l'intérieur d'un tuyau de protection (2), **caractérisé en ce que** les tubes (10) sont agencés collés sur un côté intérieur du tuyau de protection (2) et avec le tuyau de protection (2) au moyen d'une trace adhésive (9) agencée au moins partiellement sur une surface des tubes (10).

2. Système tuyau-tube (1) selon la revendication 1, **caractérisé en ce que** la trace adhésive (9) est agencée en forme de bande en sections ou en totalité sur une longueur totale du tube (10).

3. Système tuyau-tube (1) selon la revendication 1 ou 2, **caractérisé en ce qu'**un-tube central (29) et un tube de remplissage (30) sont agencés dans le système tuyau-tube (1).

4. Système tuyau-tube (1) selon l'une quelconque des revendications 1 à 3, **caractérisé en ce que** les tubes (10) sont agencés espacés uniformément les uns des autres sur le côté intérieur du tuyau de protection (2), un angle entre les points centraux (35) identique étant toujours obtenu entre deux tubes voisins (10).

5. Dispositif pour la fabrication d'un système tuyau-tube (1), qui comprend plusieurs tubes (10) pour la réception de chaleur issue d'un sol, **caractérisé en ce que** le dispositif comprend un dispositif de revêtement d'adhésif (4) pour le revêtement de tubes (3) avec une trace adhésive (9), des tubes revêtus (10) étant produits et enroulés sur un tambour de travail (7), et un agencement de montage tuyau-tube (5) pour le collage de plusieurs de ces tubes revêtus (10) avec un côté intérieur d'un tuyau de protection (2) .

6. Dispositif selon la revendication 5, **caractérisé en ce que** l'agencement de montage tuyau-tube (5) comprend un deuxième porte-tambour (20) muni de plusieurs fourches à tambour (12) pour la réception à chaque fois d'un tambour de travail (7), les fourches à tambour (12) étant agencées dans un ou dans plusieurs plans.

7. Dispositif selon la revendication 5 ou 6, **caractérisé en ce qu'**un support de tuyau de protection (21) pour le stockage et l'acheminement du tuyau de protection (2) est agencé dans l'agencement de montage tuyau-tube (5), et **en ce que** plusieurs dispositifs de guidage (27) pour l'acheminement des tubes revêtus (10) sont agencés dans ce support de tuyau de protection (21).

8. Dispositif selon l'une quelconque des revendications 5 à 7, **caractérisé en ce qu'**un dispositif de collage (22) muni de plusieurs agencements de collage (36) est agencé dans l'agencement de montage tuyau-tube (5), les agencements de collage (36) comprenant chacun un élément chauffant (37) et un élément de pression (38) .

9. Dispositif selon l'une quelconque des revendications 5 à 8, **caractérisé en ce qu'**un dispositif de soudage (23) et un conditionnement (24) sont agencés dans l'agencement de montage tuyau-tube (5).

10. Dispositif selon l'une quelconque des revendications 5 à 9, **caractérisé en ce qu'**un tube d'acheminement (28) pour l'acheminement indépendant d'un tube central (29), ainsi que d'un tube de remplissage (30), est agencé à l'intérieur du support de tuyau de protection (21).

11. Procédé de fabrication d'un système tuyau-tube (1), qui comprend plusieurs tubes (10) pour la réception de chaleur issue d'un sol, selon lequel plusieurs tubes (3) sont agencés dans un tuyau de protection (2), **caractérisé en ce que,** dans une première étape de procédé, un revêtement en forme de bande d'un tube (3) au moyen d'une trace adhésive (9) sur une surface partielle du tube (3) a lieu, un tube revêtu (10) étant mis à disposition, **en ce que**, dans une deuxième étape de procédé, plusieurs tubes (10), chacun revêtu avec une trace adhésive (9), sont collés avec le côté intérieur du tuyau de protection (2) au moyen de la trace adhésive (9) dans un passage continu à travers un et en utilisant un dispositif decollage (22).

12. Procédé selon la revendication 11, **caractérisé en ce qu'**après le revêtement du tube (3) au moyen de la trace adhésive (9) dans la première étape de procédé, un refroidissement de la trace adhésive (9) et un enroulement du tube (10) avec la trace adhésive refroidie (9) sur un tambour de travail (7) sont réalisés.

13. Procédé selon la revendication 12, **caractérisé en ce que** le tube revêtu (10) avec la trace adhésive (9) est enroulé sur le tambour de travail (7) de manière orientée vers un axe du tambour de travail (7) ou à distance de celui-ci.

14. Procédé selon l'une quelconque des revendications 11 à 13, **caractérisé en ce qu'**un nombre défini de tubes revêtus (10) avec leur trace adhésive (9) sont introduits dans la deuxième étape de procédé, de telle sorte que la trace adhésive (9) de chaque tube (10) est orientée vers un côté intérieur du tuyau de protection (2), les tubes (10) étant introduits et collés de manière répartie uniformément sur un diamètre intérieur du tuyau de protection (2).

15. Procédé selon l'une quelconque des revendications 11 à 14, **caractérisé en ce que** lors de la fabrication du système tuyau-tube (1), dans la deuxième étape de procédé, un tube central (29) et un tube de remplissage (30) sont également mis à disposition dans le système tuyau-tube (1).
